# EUROPEAN PATENT SPECIFICATION

(11) **EP 1 654 486 B1**
(45) Date of publication and mention of the grant of the patent: **09.07.2008**
(21) Application number: 04768037.6
(22) Date of filing: 10.08.2004
(51) Int. Cl.: F16K 47/10

(54) **VALVE ASSEMBLY**
VENTILANORDNUNG
ENSEMBLE SOUPAPE

(30) Priority: 13.08.2003 GB 0318954
(43) Date of publication of application: 10.05.2006
(73) Proprietor: HALDEX BRAKE PRODUCTS LIMITED, Redditch, Worcestershire B98 9HA (GB)
(72) Inventor: SHAW, Edward Gilbert, Inkberrow, Worcester WR7 4HD (GB); COTTOM, Ian Martin, Redditch, Worcestershire B97 5SL (GB)
(74) Representative: Lockey, Robert Alexander
(86) International application number: PCT/GB2004/003461
(87) International publication number: WO 2005/017400

(56) References cited:
- WO-A-03/031855
- DE-A- 3 433 704
- DE-A- 4 338 096
- US-A- 3 409 050
- US-A- 3 566 902

## Description

### Description of Invention

The present invention relates to a valve assembly, in particular to a valve assembly having a control chamber, the valve assembly applying, holding or releasing fluid pressure in a working volume according to the pressure within the control chamber, and a flow control device which is connected -to the control chamber to control flow of fluid out of the control chamber. The invention also relates to the flow control device itself.

Valve assemblies which are operable to apply, hold or release fluid pressure in a working volume are known, for example, as an ABS valve for a vehicle braking system. In this case, the working volume applies an actuating force to a vehicle brake.

An example of such a valve assembly is described in detail in WO03/031855. This valve assembly includes three ports - a supply port to which pressurised fluid is supplied to the valve assembly in response to demand by a driver of the vehicle, a delivery port which delivers fluid to the vehicle brake in order to actuate the brake, and an exhaust port which vents to atmosphere.

The valve assembly is provided with a control chamber, the pressure in which determines the control state of the valve assembly. When the pressure in the control chamber is low, for example less than 20% of the pressure of the fluid supplied via the supply port (the supply pressure), the supply port is connected to the delivery port, and hence the fluid pressure in the working volume, i.e. applied to the vehicle brake, increases. This is referred to as the apply state. When the pressure in the control chamber is high, for example greater than 80% of the supply pressure, the delivery port is connected to the exhaust port, and thus the fluid pressure in the working volume is released. This is referred to as the release state. Finally, when the pressure in the control chamber is at a medium level, 50% of the supply pressure for example, the delivery port is isolated from the supply and exhaust ports, and thus the pressure in the working volume is maintained. This is referred to as the hold state.

The control chamber includes an inlet and outlet, the inlet being connected to a supply of relatively high pressure fluid, in this case the supply port, and the outlet being connected to a supply of relatively low pressure fluid, in this example venting to atmosphere. The pressure in the control chamber is controlled using a solenoid valve which may be switched between a vent position, in which the valve closes the inlet and opens the outlet thus allowing fluid to escape from the control chamber, and a build position, in which the valve closes the outlet and opens the inlet thus allowing fluid to be delivered to the control chamber.

Holding the solenoid valve in the build position, causes the pressure in the control chamber to increase until it reaches 80% of the supply pressure, at which point the valve assembly enters the release state. Holding the solenoid valve in the vent position causes the pressure in the control chamber to decrease until it reaches 20% of the supply pressure, at which point the valve assembly enters the apply state.

To maintain the valve assembly in the hold state, a fluctuating electrical signal is applied to the solenoid valve so that the valve switches rapidly between the vent and build positions. The fluid pressure in the control chamber thus alternately increases and decreases, and the valve assembly is configured to achieve an average control chamber pressure of 50% of the supply pressure when the solenoid valve is switched one way and then the other for equal periods of time.

Nevertheless, it has been found that this can only be achieved over a limited supply pressure range. It has been found that the control chamber pressure averages at less than 50% of the supply pressure at low supply pressures, and at high supply pressures the control chamber pressure averages at more than 50% of the supply pressure. This is undesirable as, if the average control chamber pressure deviates significantly from 50%, as the control chamber pressure fluctuates, the valve assembly might briefly be switched to the apply or release state, rather than being maintained in the hold state as desired.

According to a first aspect of the invention, we provide a valve assembly comprising a chamber, the chamber having an inlet which is adapted to be connected to a source of relatively high pressure fluid, and an outlet which is adapted to be connected to a volume of relatively low pressure fluid, and a switch valve which is switchable between a first configuration in which the valve closes the outlet and opens the inlet, and a second configuration in which the valve closes the inlet and opens the outlet, characterised in that a flow control device is provided between the outlet and the volume of relatively low pressure fluid, the flow control device including a restrictor portion which restricts flow of fluid through the flow control device, the extent to which fluid flow is restricted decreasing as the fluid pressure in the chamber increases.

At low supply pressures, where the control pressure is low, flow out of the control chamber is restricted. Thus, the flow control device assists in increasing the average control chamber pressure as a proportion of supply pressure when the switch valve is switched between its first and second positions. At high supply pressures, when the control chamber pressure is high, flow out of the control chamber is less restricted. Thus, the flow control device assists in decreasing the average control chamber pressure as a proportion of the supply pressure as a proportion of the supply pressure when the switch valve is switched between its first and second positions.

Thus, by virtue of the invention, the pressure in the chamber may be more reliably controlled over a larger range of inlet pressures.

Preferably the restrictor portion increases the cross-sectional area available for flow of fluid through the flow control devices as the fluid pressure in the chamber increases.

Preferably, the valve assembly further includes control means which is operable repeatedly to switch the switch valve between its first and second configurations in order to maintain the fluid pressure in the chamber at a value between the pressure of the relatively high pressure fluid and the pressure of the relatively low pressure fluid.

As indicated above, at low supply pressures, the flow control device restricts fluid flow out of the chamber. Thus, the flow control device assists in increasing the average control chamber pressure when the switch valve is switched between its first and second positions. At high supply pressures, fluid flow out of the control chamber is less restricted. Thus, the flow control device assists in decreasing the average control chamber pressure when the switch valve is switched between its first and second positions for equal periods of time.

Thus, by virtue of the invention, the average pressure in the chamber may be maintained at around 50% of the supply pressure when the switch valve is switched between its first and second positions over a greater range of supply pressures.

Preferably, the switch valve includes a valve member which is movable between a first position in which the valve member closes the outlet and opens the inlet, and a second position in which the valve member closes the inlet and opens the outlet.

The valve member of the switch valve may be solenoid operated.

Alternatively, the valve member of the switch valve may be piezoelectrically operated.

The flow control device may include an aperture through which fluid from the chamber may flow, the aperture being partially blocked by a movable flow restrictor part, the flow restrictor part being adapted to move in response to forces exerted on the flow restrictor part resulting from differences in pressure between the fluid in the chamber, and the pressure of fluid in the volume of relatively low pressure fluid.

In this case, the flow restrictor part preferably moves to block a smaller proportion of the aperture as the fluid pressure in the chamber increases with respect to the pressure of fluid in the volume of relatively low pressure fluid.

The flow restrictor part may be a formation which extends inwardly of the aperture, and which is made of a resilient material such as rubber.

Alternatively, the flow control device may include a first and second aperture through which fluid from the chamber may flow, the first aperture being provided with a valve member, a valve seat, and resilient biasing means which provides a biasing force urging the valve member into engagement with the valve seat, thus blocking the aperture, the resilient biasing means being arranged such that the valve member may be moved from the valve seat against the biasing force of the resilient biasing means when the fluid pressure in the chamber exceeds the fluid pressure at the outlet port by a predetermined amount. In this case, the valve member may be a ball bearing.

The valve assembly may further include a main valve for controlling fluid pressure in a working volume in three control states, the main valve having three ports for fluid, a first port supplying relatively high pressure fluid to the chamber inlet, flow of fluid from the first port to a second port being permitted when in the first control state, flow of fluid from the second port to a third port being permitted when in the second control state, and flow of fluid between the first, second and third ports being prevented when in the third control state.

In this case, the first control state may be achieved when the fluid pressure in the chamber is less than a predetermined lower proportion of the pressure of the relatively high pressure fluid, the second control state may be achieved when the fluid pressure in the chamber exceeds a predetermined upper proportion of the pressure of the relatively high pressure fluid, and the third control state being achieved when the fluid pressure in the chamber is between the predetermined upper and lower proportions.

In this case, the second port may supply fluid to a vehicle brake operating means.

In this case, the valve assembly may be an ABS valve.

Alternatively, the valve assembly may be an EBS valve.

According to a second aspect of the invention we provide a flow control device providing a conduit for flow of fluid between a first end of the device and a second end, the flow control device being provided with a restrictor portion which restricts flow of fluid through the device, the extent to which fluid flow is restricted decreasing as the difference in fluid pressure between the first and second ends of the device increases.

Preferably restrictor portion increases the cross-sectional area available for flow of fluid through the device as a difference in fluid pressure between the first and second ends of the device increases.

Preferably the flow control device is provided with an aperture which provides the conduit for flow of fluid, the aperture being partially blocked by a movable flow restrictor part, the flow restrictor part being adapted to move in response to forces exerted in the flow restrictor part resulting from the difference in fluid pressure between the first and second ends of the device. In which case, the flow restrictor part may be a formation which extends inwardly of the aperture and which is made of a resilient material.

Alternatively, the flow control device may include a first and second aperture which both provide the conduit for flow of fluid, the first aperture being provided with a valve member, a valve seat, and resilient biasing means which provides a biasing force urging the valve member into engagement with the valve seat, thus blocking the aperture, the resilient biasing means being arranged such that the valve member may be moved from the valve seat against the biasing force of the resilient biasing means when fluid pressure at the first end of the device exceeds the fluid pressure at the second end of the device by a predetermined amount.

The invention will now be described with reference to the accompanying drawings of which
Figure 1 is a diagrammatic illustration of a valve assembly according to the first aspect of the invention when in the apply state,
Figure 2 is a diagrammatic illustration of the valve assembly of Figure 1 when in the release state,
Figure 3 is a diagrammatic illustration of the valve assembly of Figure 1 when in the hold state,
Figure 4 is a perspective view of the valve assembly of Figure 1,
Figure 5 is a broken away perspective view of a portion of the valve assembly of Figure 4,
Figure 6 is a broken away perspective view of a first embodiment of flow control device according to the second aspect of the invention in a low pressure condition,
Figure 7 is a broken away perspective view of the flow control device of Figure 6 in a high pressure condition,
Figure 8 is a diagrammatic illustration of an alternative embodiment of flow control device according to the second aspect of the invention in a low pressure condition,
Figure 9 is a diagrammatic illustration of the flow control device of Figure 8 in a high pressure condition.

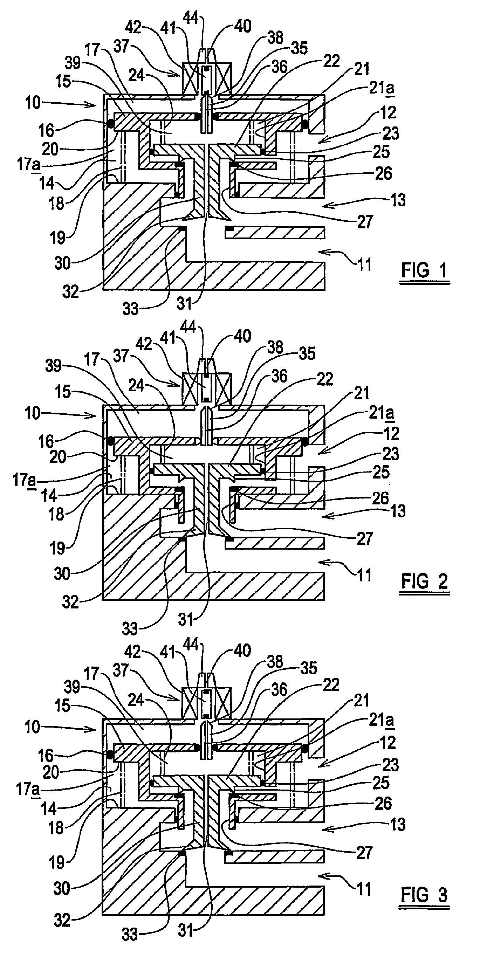

Referring now to Figure 1, 2 and 3, there is shown a valve assembly 10 comprising a main valve having a valve body with a first (supply) port 11 for connection to a supply of fluid under pressure, a second (delivery) port 13, and a third (exhaust) port 12 whereby fluid under pressure may be exhausted to atmosphere or another low pressure region (in which the pressure is lower than that in the supply) and preferably is at or about at atmospheric pressure.

In this example, the valve assembly is an ABS or EBS valve assembly for a vehicle braking system. As such, the supply port 11 is connected to a compressed air source, the compressed air being delivered to the supply port 11 in response to activation of a brake control in the vehicle, and the delivery port 13 is connected to a brake actuator, such that fluid passing through the delivery port 13 may be used to actuate a vehicle brake. When the valve assembly 10 is used as an ABS or EBS valve in a vehicle braking system, the supply pressure typically ranges from 0 bar up to 10 bar, depending on the demand placed on the braking system by a driver of the vehicle.

Within the valve body is a first chamber 14 in which a first piston 15 is slidably mounted with seal 16, a rubber o-ring in this example, provided between the piston 15 and a cylindrical wall of the chamber 14. The region of the chamber 14 above the piston 15 is indicated at 17 and comprises a control chamber. The region beneath the piston 15 is indicated at 17a and communicates with the exhaust port 13.

A coil compression spring 18 is disposed between a bottom wall 19 of the first chamber 14 and a shoulder 20 of the piston 15 to ensure that the piston 15 returns when there is no fluid pressure at the supply port 11 (supply pressure).

A second chamber 21 is provided within the first piston 15 and houses a second piston 22 which is in sealing engagement through seal 23, a rubber o-ring in this example with a cylindrical wall 21a of the chamber 21. A coil compression spring 24 is provided to act between the first and second pistons 15 and 22 so as to urge the second piston 22 downwardly relative to the first piston 15 to ensure that the pistons return when there is no supply pressure. The second piston 22 is provided with a formation 25 for engagement with a third or dump seat 26 provided on the first piston 15 so as to control passage of fluid through a sleeve part 27 of the piston 15 and thus controls passage of fluid under pressure from the delivery port 13 to the exhaust port 12.

The second piston 22 is provided with a tubular downwardly extending part 30 which has a central bore 31 and a formation 32 for sealing engagement with a hold seat 33 provided on the body 10 so as to control passage of fluid under pressure from supply port 11 to delivery port 13. The formation 32 maybe a resilient seal element and the seat 33 may be a triangular section ring. Alternatively, the formation 32 may be a rigid formation and the seat 33 may be a resilient seal element.

At its upper end the body 10 is provided with a downwardly extending tubular part 35 which is provided with a central bore 36 which extends from an upper part 39 of the chamber 21, which is above the second piston 22, through an aperture in the first piston 15 and into the control chamber 17 to provide an inlet for the control chamber 17. A substantially fluid tight seal which permits movement of the first piston 15 with respect to the tubular part 35 is provided between the tubular part 35 and the first piston 15 by means of an o-ring. Fluid may thus flow from the supply port 11 through the bore 31 in the downwardly extending part 30 of the second piston 22, into the chamber 39 above the second piston 22, through the bore 36 of the tubular part 35 and into the control chamber 17. The inlet of the control chamber 17 is thus connected to the supply port 11, and hence to a supply of relatively high pressure fluid.

The tubular part 35 extends through the chamber 17 to a switch valve which, in this example, comprises a solenoid valve 37. An outlet of the solenoid valve 37 provides an outlet from the control chamber 17, and thus the solenoid valve 37 provides a conduit for flow of fluid from the control chamber 17 to a volume of relatively low pressure fluid. In this example, the outlet is exhausted to atmosphere.

The solenoid valve 37 includes a solenoid 42 and a valve member 41 which is movable from a first position, in which it engages with a second seat 40 and closes the outlet thus preventing fluid from escaping from the control chamber 17 via the outlet, and a second position, in which it engages with a first seat 38 provided on the tubular part to prevent fluid from entering the control chamber via the tubular part 35. Thus, when the valve member 41 is in its first position, the inlet of the control chamber 17 is open, and fluid can enter the control chamber from the supply port 11 but cannot escape from the control chamber 17 via the outlet, and when the valve member 41 is in its second position, the outlet of the control chamber 17 is open, and fluid can escape from the control chamber 17 via the outlet but cannot enter the control chamber 17 through the inlet.

In this example, the solenoid valve 37 is arranged such that the valve member 41 moves to the first position when the solenoid 42 is energised, and moves to the second position when the solenoid is de-energised. An electronic controller is provided to control the solenoid, and hence movement of the valve member 41.

In use, when the solenoid 42 is de-energised for a continuous period of for example >30ms and the pressure in the control chamber 17 decreases towards the pressure of the fluid in the volume of relatively low pressure fluid, which , in this example is atmospheric pressure. In this example, the valve is configured such that when the control chamber pressure is less than, for example, 20% of the pressure in the supply port 11 then the components of the valve assembly 10 occupy the position shown in Figure 1 so that the hold seat 33 is open and the exhaust seat 26 is closed and therefore there is free flow of the supply from the supply port 11 to the delivery port 13 and vice versa. The valve assembly 10 is thus in the apply state.

When the solenoid 42 is continuously energised and the pressure in the control chamber 17 increases towards the supply pressure. In this example, the valve is configured such that when the control chamber pressure is greater than say 80% of the pressure in the supply port 11 the components of the valve assembly 10 adopt the positions shown in Figure 2 and so the delivery port 13 is connected to the exhaust port 12. The valve assembly 10 is thus in the release state.

When the solenoid 42 is switched on and off rapidly for example 50 cycles per second (cps) and typically in the range 25 cps to 100 cps this results in the pressure in the control chamber 17 being maintained at values intermediate the supply pressure and atmospheric pressure. The time interval between switching of the solenoid 42 may be selected such that the control chamber pressure remains greater than 20% and less than 80% of the supply pressure. In this case the valve components adopt the position as shown in Figure 3 and so the delivery port 13 is isolated from both the exhaust port 12 and the supply port 11. The valve assembly is thus in the hold state.

When used as an ABS valve, if braking intervention is required due to wheel lock, operation of the solenoid valve 37 is controlled such that the valve assembly first enters the release state, to release the pressure on the brake actuator. The pressure on the brake actuator is then built up, step by step, until the maximum braking force, determined by the supply pressure is applied. To achieve this, the solenoid valve 37 is controlled such that the valve assembly enters the apply state for a short period of time, to allow a small increase in the pressure applied to the brake, and then is maintained in the hold state for a short period of time before returning to the apply state. This process, hereinafter referred to as a step cycle, is repeated until the maximum braking force is achieved.

When used as an EBS valve, the valve assembly is controlled in a conventional manner, via the solenoid valve 37, by electrical brake control logic.

Such a valve assembly is disclosed in International patent application no. WO03/031855, and in this case, the valve assembly 10 is designed such that the mass flow rate through the outlet from a given pressure in the control chamber 17 is approximately equal to the mass flow through the inlet from a supply pressure which is double the control chamber pressure. This should mean that when the solenoid valve 37 is switched one way and then the other for equal periods of time, the pressure in the control chamber 17 averages at about 50% of the supply pressure. The cross-sectional areas of the inlet and outlet and the period of time for which the solenoid valve 37 is held in each position are chosen such that the fluctuations in the control chamber pressure are not sufficiently great that the control chamber pressure drops below 20% or increases above 80% of the supply pressure. Thus, when the solenoid valve 37 is switched as described above, the valve assembly should be maintained in the hold state, and should not enter the apply or release states.

It has, however, been discovered that the average control chamber pressure tends to be lower than 50% of the supply pressure when the supply pressure is near the bottom of its range, and higher than 50% of the supply pressure when the supply pressure is near the top of its range. Thus, at low supply pressures, there is a possibility that the control chamber pressure will momentarily drop below 20% of the supply pressure, and thus cause the valve assembly to enter the apply state when it is intended that the valve assembly should be maintained in the hold state. Correspondingly, at high supply pressures, there is a possibility that the control chamber pressure will momentarily increase above 80% of the supply pressure, and thus cause the valve assembly to enter the release state when it is intended that the valve assembly be maintained in the hold state.

This can be particularly disadvantageous when the valve assembly is used as an ABS valve. If at high supply pressures, the valve assembly momentarily enters the release state when it should be in the hold state, the pressure applied to the brake actuator decreases instead of being maintained at a constant value. Thus, after a certain number of apply/hold step cycles, the actual pressure applied to the brake actuator will be lower than intended. Moreover since the average control chamber pressure is higher than it should be, when the solenoid valve 37 is switched to the second position to vent the control chamber pressure it takes longer for the control chamber pressure to fall below 20% of the supply pressure and thus reach the apply state, than it would if the average control chamber pressure had been at 50%. Thus, the valve assembly spends less time in the apply state than intended, and hence the step increase in pressure applied to a brake actuator is lower than intended.

Alternatively, if at lower supply pressures, the valve assembly momentarily enters the build state when it should be in the hold state, the pressure applied to the brake actuator increases instead of being maintained at a constant value. Thus, after a certain number of apply/hold step cycles, the actual pressure applied to the brake actuator will be higher than intended, and the maximum braking pressure may be achieved with fewer apply/hold step cycles than intended.

This affect has been attributed, at least partly, to the fact that the physical type of flow through an orifice changes, depending on the pressures on either side of the orifice, and thus the mass flow rate through the inlet and outlet varies with the supply pressure.

In addition, the pressure of fluid in the control chamber 17 exerts a force on the valve member 41 which urges the valve member 41 against the valve seat 40 around the outlet. Thus, at high supply pressures, to move the valve member from the first position to the second position, the solenoid 42 has to overcome a greater force than at lower supply pressures, and hence there may be a slight delay in switching the valve member 41 from its first position to its second position at higher supply pressures, compared to at low pressures. Thus, although the electrical signal sent to control operation of the solenoid valve 37 may be set to switch the valve 37 at equal time intervals, in reality, at high supply pressures, the valve member 41 may remain in its first position for longer than it remains in its second position. This would also contribute to increasing the average pressure in the control chamber 17.

In order to overcome this problem, a flow control device 44 is provided at the outlet of the control chamber 17, to control the flow of fluid out of the control chamber 17. The flow control device 44 includes a restrictor portion which restricts flow of fluid through the flow control device 44, the extent to which fluid flow is restricted decreasing as the fluid pressure in the control chamber 17 increases. This is achieved by increasing the minimum cross-sectional area available for flow of fluid through the device 44 as the fluid pressure in the chamber increases. Thus at high supply pressures, flow of fluid from the outlet is impeded less than at lower pressures, and the mass flow rate from the outlet is increased. Hence the average control chamber pressure when the solenoid valve 37 is switched to bring the valve assembly to the hold state may be reduced to around 50% of the supply pressure. Similarly, at low pressures, the mass flow rate from the outlet is decreased, and hence the average control chamber pressure when the solenoid valve 37 is switched may be increased to around 50% of the supply pressure. The provision of the flow control device thus ensures that the control chamber pressure may be maintained at around 50% of the supply pressure over a greater range of supply pressures than was previously possible.

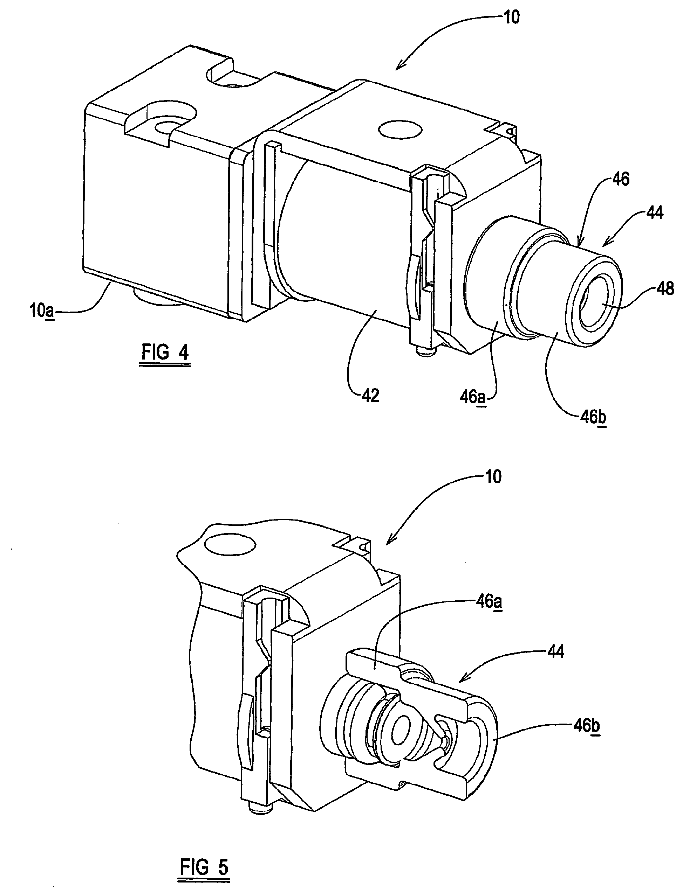

A first embodiment of flow control device 44 is illustrated in Figures 4 to 7, and comprises a tubular body 46 which encloses a generally cylindrical passage 48, and which has a first part 46a and a second part 46b. The first part 46a is adapted to fit around an outlet portion of the solenoid valve 37 and provide a substantially fluid tight seal between the solenoid valve 37 and the flow control device 44 and the second part 46b is provided with a flow restrictor part 50 which extends radially inwardly of the body 46 to partially block the passage 48. The flow restrictor part thus reduces the minimum cross-sectional area of the aperture, and hence the area available for flow of fluid through the outlet and out of the control chamber 17. The flow control device 44 is made from a resilient material such as rubber, and the flow restrictor part 50 is integral with the body 46.

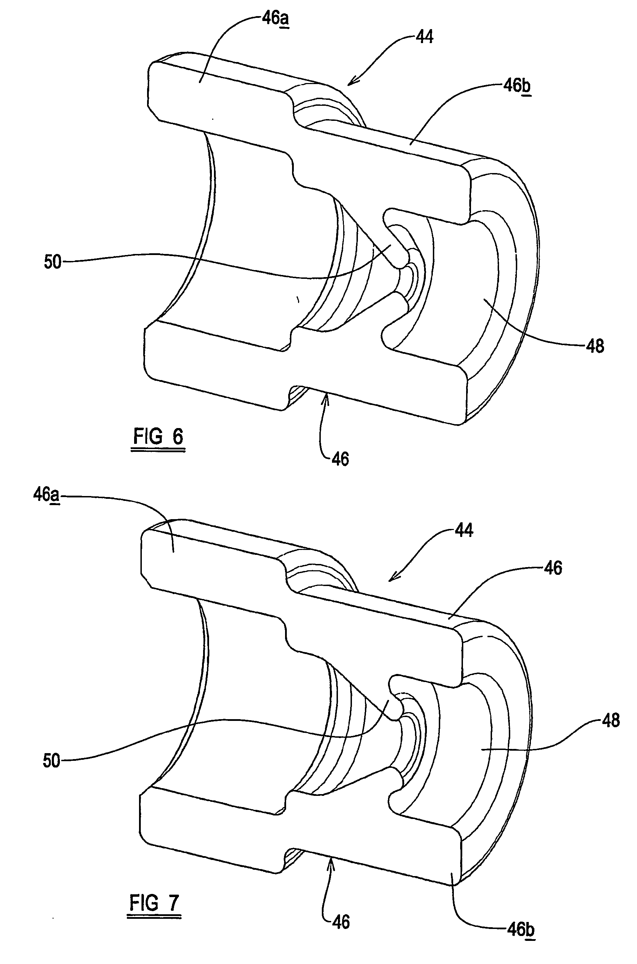

The flow restrictor part 50 is inclined relative to the body 46 such that a free edge of the flow restrictor part 50 is further from the control chamber 17 than the remainder of the flow restrictor part 50. The flow restrictor part 50 is sufficiently flexible, that when the pressure in the control chamber 17 increases towards the upper end of its range, the flow restrictor part 50 deforms under the pressure of the fluid in the control chamber 17 such that the free edge of the flow restrictor part is pushed towards the body 46, thus increasing the minimum cross-sectional area available for flow of fluid through the outlet. This is illustrated in Figure 7. At low control chamber pressures, the flow restrictor part is undeformed, and thus the minimum cross-sectional area of the outlet is minimised. This is illustrated in Figure 6.

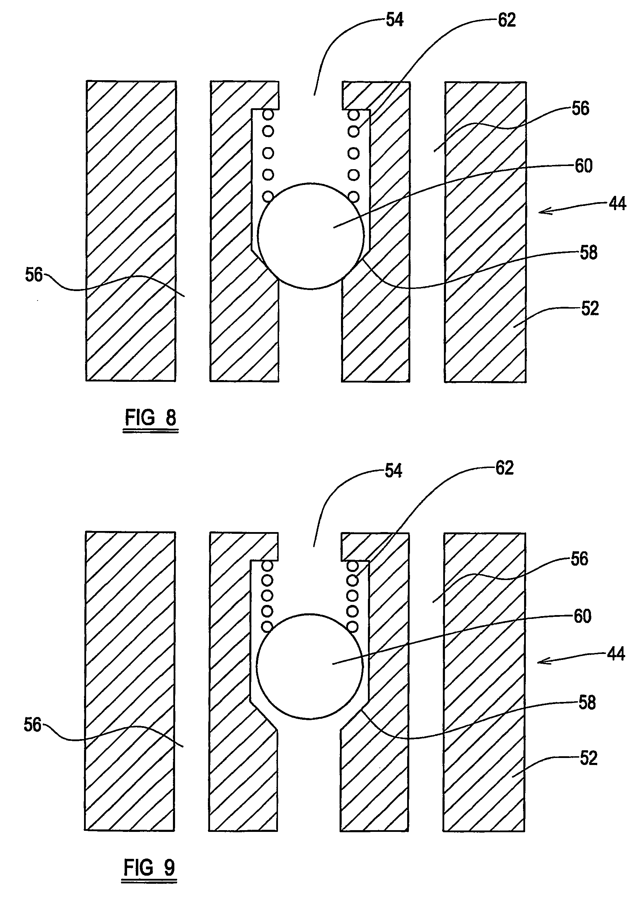

A second embodiment of flow control device is illustrated in Figures 8 and 9. In this case the flow control device comprises a body 52 which is provided with a generally central bore 54, and two by-pass bores 56, the three bores 54, 56 extending through the body 52 generally parallel to one another. The three bores 54, 56 provide a conduit or outlet for flow of fluid from the solenoid valve 37 to the volume of relatively low pressure fluid.

The central bore 54 is provided with a seat 58 and a valve member 60, which in this example is generally spherical. The valve member 60 is urged into engagement with the seat 58 by means of a resilient biasing element 62, in this example a coil spring, such that the valve member 60 substantially closes the bore 54.

The spring 62 is arranged such that it urges the valve member 60 towards the control chamber 17, and the strength of the spring 62 is chosen such that, if the pressure in the control chamber is at the upper end of the desired range, the force exerted on the valve member 60 by the fluid in the control chamber 17 is sufficient to overcome the biasing force of the spring 62, and push the valve member 60 away from the seat 58. Thus, at high control chamber pressures, i.e. high supply pressures, fluid may flow through the by-pass bores 56 and the central bore 54, and therefore the minimum cross-sectional area available for- flow of fluid through the outlet is increased. This is illustrated in Figure 9.

At low control chamber pressures, the force exerted on the valve member 60 by the fluid in the control chamber 17 is not sufficient to overcome the biasing force of the spring 62, and thus the valve member 60 remains engaged with the seat 58 and thus blocks the central bore 54. Thus, fluid may flow through the by-pass bores 56 only, and the minimum cross-sectional area available for flow of fluid through the outlet is at a minimum. This is illustrated in Figure 8.

It will be appreciated that, if desired, instead of the switch valve 37 being a solenoid valve as described above, the switch valve 37 may comprise a piezoelectric valve, movement of the valve member 41 effected by a piezoelectric element.

Although in the example, the fluid controlled by the valve assembly is compressed air, the valve assembly may be applied to any desired fluid, whether hydraulic or pneumatic.

Although the valve assembly is described as being used as an ABS or EBS valve, it may be used in any fluid system where is it desired to control fluid pressure in a working volume in three control states - a first where flow of fluid from a first port to a second port is permitted, a second where flow of fluid from the second port to a third port is permitted, and a third where flow of fluid between the first, second and third ports is prevented. Moreover, the invention may be used in any system where an intermediate pressure is required to be produced by a device which switches alternatively between a higher pressure and a lower pressure source.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A valve assembly (10) comprising a chamber (17), the chamber (17) having an inlet which is adapted to be connected to a source of relatively high pressure fluid, and an outlet which is adapted to be connected to a volume of relatively low pressure fluid, and a switch valve (37) which is switchable between a first configuration in which the valve (37) closes the outlet and opens the inlet, and a second configuration in which the valve closes the inlet and opens the outlet, **characterised in that** a flow control device (44) is provided between the outlet and the volume of relatively low pressure fluid, the flow control device (44) including a restrictor portion which restricts flow of fluid through the flow control device, the extent to which fluid flow is restricted decreasing as the fluid pressure in the chamber (17) increases.

2. A valve assembly (10) according to claim 1 wherein the restrictor portion increases the cross-sectional area available for flow of fluid through the flow control device (44) as the fluid pressure in the chamber (17) increases.

3. A valve assembly (10) according to claim 1 or 2 wherein the valve assembly (10) further includes control means which is operable repeatedly to move the switch valve (37) between its first and second configurations in order to maintain the fluid pressure in the chamber (17) at a value between the pressure of the relatively high pressure fluid and the pressure of the relatively low pressure fluid.

4. A valve assembly according to claim 1, 2 or 3 wherein the switch valve (37) includes a valve member (42) which is movable between a first position in which the valve member (42) closes the outlet and opens the inlet and a second position in which the valve member (42) closes the inlet and opens the outlet.

5. A valve assembly (10) according to any preceding claim wherein the flow control device (44) includes an aperture (48) through which fluid from the chamber (17) may flow, the aperture being partially blocked by a movable flow restrictor part (50), the flow restrictor part (50) being adapted to move in response to forces exerted on the flow restrictor part (50) resulting from the difference in pressure between the fluid in the chamber (17), and the fluid in the volume of relatively low pressure fluid.

6. A valve assembly (10) according to claim 5 wherein the flow restrictor part (50) moves to block a smaller proportion of the aperture (48) as the fluid pressure in the chamber (17) increases with respect to the pressure of fluid in the volume of relatively low pressure fluid.

7. A valve assembly (10) according to claim 5 or 6 wherein the flow restrictor part (50) is a formation which extends inwardly of the aperture (48), and which is made of a resilient material.

8. A valve assembly (10) according to any one of claims 1 to 4 wherein the flow control device (44) includes a first (54) and second aperture (56) through which fluid from the chamber may flow, the first aperture (54) being provided with a valve member (60), a valve seat (58), and resilient biasing means (62) which provides a biasing force urging the valve member (60) into engagement with the valve seat (58), thus blocking the aperture (54), the resilient biasing means (62) being arranged such that the valve member (60) may be moved from the valve seat (58) against the biasing force of the resilient biasing means (62) when the fluid pressure in the chamber (17) exceeds the fluid pressure at the outlet by a predetermined amount.

9. A valve assembly (10) according to claim 8 wherein the valve member (60) is a ball bearing.

10. A valve assembly (10) according to any preceding claim wherein the valve assembly (10) further includes a main valve for controlling fluid pressure in a working volume in three control states, the main valve having three ports for fluid, a first port (11) supplying relatively high pressure fluid to the chamber inlet, flow of fluid from the first port (11) to a second port (12) being permitted when in the first control state, flow of fluid from the second port (12) to a third port (13) being permitted when in the second control state, and flow of fluid between the first (11), second (13) and third (12) ports being prevented when in the third control state.

11. A valve assembly (10) according to claim 10 wherein the first control state is achieved when the fluid pressure in the chamber (17) is less than a predetermined lower value, the second control state is achieved when the fluid pressure in the chamber (17) exceeds a predetermined upper value, and the third control state is achieved when the fluid pressure in the chamber (17) is between the predetermined upper and lower values.

12. A valve assembly according to claim 10 or 11 wherein the second port (13) supplies fluid to a vehicle brake operating means.

13. A valve assembly according to claim 12 wherein the valve assembly is an ABS valve.

14. A valve assembly according to claim 12 wherein the valve assembly is an EBS valve.

## Patentansprüche

1. Ventilanordnung (10) mit einer Kammer (17), wobei die Kammer (17) einen Einlass, der angepasst ist, um mit einer Quelle eines Fluids relativ hohen Drucks verbunden zu werden, und einen Auslass, der angepasst ist, um mit einem Volumen eines Fluids relativ niedrigen Drucks verbunden zu werden, aufweist, und mit einem Schaltventil (37), welches zwischen einer ersten Stellung, in der das Ventil (37) den Auslass verschließt und den Einlass öffnet, und einer zweiten Stellung, in der das Ventil (37) den Einlass verschließt und den Auslass öffnet, schaltbar ist, **dadurch gekennzeichnet, dass** eine Flussregelvorrichtung (44) zwischen dem Auslass und dem Volumen des Fluid relativ niedrigen Drucks vorgesehen ist, wobei die Flussregelvorrichtung (44) ein Drosselelement aufweist, welches den Fluss des Fluids durch die Flussregelvorrichtung (44) drosselt, wobei das Ausmaß, auf welches der Fluss des Fluids begrenzt wird, absinkt, wenn der Druck des Fluids in der Kammer (17) steigt.

2. Ventilanordnung (10) nach Anspruch 1, **dadurch gekennzeichnet, dass** das Drosselelement die Querschnittsfläche, welche für einen Fluss des Fluids durch die Flussregelvorrichtung (44) zur Verfügung steht, vergrößert, wenn der Druck des Fluids in der Kammer (17) steigt.

3. Ventilanordnung (10) nach Anspruch 1 oder 2, **dadurch gekennzeichnet, dass** die Ventilanordnung (10) weiterhin ein Regelmittel aufweist, welches wiederholbar bedienbar ist, um das Schaltventil (37) zwischen seiner ersten und zweiten Stellung zu bewegen, um den Druck des Fluids in der Kammer (17) bei einem Wert zwischen dem Druck des Fluids relativ hohen Drucks und dem Druck des Fluids relativ niedrigen Drucks aufrechtzuerhalten.

4. Ventilanordnung (10) nach Anspruch 1, 2 oder 3, **dadurch gekennzeichnet, dass** das Schaltventil (37) ein Ventilelement (42) aufweist, welches zwischen einer ersten Stellung, in der das Ventilelement (42) den Auslass verschließt und den Einlass öffnet, und einer zweiten Stellung, in der das Ventilelement (42) den Einlass verschließt und den Auslass öffnet, bewegbar ist.

5. Ventilanordnung (10) nach einem der voranstehenden Ansprüche, **dadurch gekennzeichnet, dass** die Flussregelvorrichtung (44) eine Öffnung (48) aufweist, durch die Fluid von der Kammer (17) fließen kann, wobei die Ordnung (48) teilweise durch ein bewegliches Flussdrosselelement (50) blockiert ist, wobei das Flussdrosselelement (50) angepasst ist, um sich in Abhängigkeit von Kräften zu bewegen, die auf das Flussdrosselelement (50) wirken und aus der Druckdifferenz zwischen dem Fluid in der Kammer (17) und dem Fluid in dem Volumen des Fluids relativ niedrigen Drucks resultieren.

6. Ventilanordnung (10) nach Anspruch 5, **dadurch gekennzeichnet, dass** sich das Flussdrosselelement (50) bewegt, um einen kleineren Teil der Öffnung (48) zu blockieren, wenn der Druck des Fluids in der Kammer (17) relativ zu dem Druck des Fluids in dem Volumen des Fluids relativ niedrigen Drucks ansteigt.

7. Ventilanordnung (10) nach Anspruch 5 oder 6, **dadurch gekennzeichnet, dass** das Flussdrosselelement (50) ein Gebilde ist, welches sich von der Öffnung (48) nach innen erstreckt und aus einem nachgiebigen Material besteht.

8. Ventilanordnung (10) nach einem der Ansprüche 1 bis 4, **dadurch gekennzeichnet, dass** die Flussregelvorrichtung (44) eine erste Öffnung (54) und eine zweite Öffnung (56) aufweist, durch die Fluid aus der Kammer (17) fließen kann, wobei die erste Öffnung (54) mit einem Ventilelement (60), einem Ventilsitz (58) und einem nachgiebigen Beaufschlagungsmittel (62) versehen ist, welches eine Vorspannkraft bereitstellt, die das Ventilelement (60) in Eingriff mit dem Ventilsitz (58) bringt, wodurch die erste Öffnung (54) blockiert wird, wobei das nachgiebige Beaufschlagungsmittel (62) so angeordnet ist, dass das Ventilelement (60) von dem Ventilsitz (58) gegen die Vorspannkraft des nachgiebigen Beaufschlagungsmittels (62) bewegt werden kann, wenn der Druck des Fluids in der Kammer (17) den Druck des Fluids an dem Auslass um einen bestimmten Betrag überschreitet.

9. Ventilanordnung (10) nach Anspruch 8, **dadurch gekennzeichnet, dass** das Ventilelement (60) ein Kugellager ist.

10. Ventilanordnung (10) nach einem der voranstehenden Ansprüche, **dadurch gekennzeichnet, dass** die Ventilanordnung (10) weiterhin ein Hauptventil zum Regeln des Drucks des Fluids in einem Arbeitsvolumen in drei Regelzuständen aufweist, wobei das Hauptventil drei Anschlüsse für Fluid aufweist, wobei ein erster Anschluss (11) Fluid relativ hohen Drucks dem Einlass der Kammer bereitstellt, wobei ein Fluss des Fluids von dem ersten Anschluss (11) zu einem zweiten Anschluss (13) in dem ersten Regelzustand gestattet ist, wobei ein Fluss des Fluids von dem zweiten Anschluss (13) zu einem dritten Anschluss (12) in dem zweiten Regelzustand gestattet ist, und wobei ein Fluss des Fluids zwischen dem ersten Anschluss (11), dem zweiten Anschluss (13) und dem dritten Anschluss (12) in dem dritten Regelzustand verhindert ist.

11. Ventilanordnung (10) nach Anspruch 10, **dadurch gekennzeichnet, dass** der erste Regelzustand erreicht ist, wenn der Druck des Fluids in der Kammer (17) kleiner als ein vorbestimmter niedrigerer Druck ist, der zweite Regelzustand erreicht ist, wenn der Druck des Fluids in der Kammer (17) einen vorbestimmten höheren Wert überschreitet, und dass der dritte Regelzustand erreicht ist, wenn der Druck des Fluids in der Kammer (17) zwischen dem vorbestimmten höheren und niedrigeren Wert liegt.

12. Ventilanordnung (10) nach Anspruch 10 oder 11, **dadurch gekennzeichnet, dass** der zweite Anschluss (13) einem Bremsbetätigungsmittel eines Fahrzeugs Fluid bereitstellt.

13. Ventilanordnung (10) nach Anspruch 12, **dadurch gekennzeichnet, dass** die Ventilanordnung (10) ein ABS-Ventil ist.

14. Ventilanordnung (10) nach Anspruch 12, **dadurch gekennzeichnet, dass** die Ventilanordnung (10) ein EBS-Ventil ist.

## Revendications

1. Ensemble de soupape (10) comprenant une chambre (17), la chambre (17) ayant une entrée qui est adaptée pour être reliée à une source de fluide sous pression relativement élevée, et une sortie qui est adaptée pour être reliée à un volume de fluide sous pression relativement faible, et une soupape de commutation (37) qui peut être commutée entre une première configuration dans laquelle la soupape (37) ferme la sortie et ouvre l'entrée, et une seconde configuration dans laquelle la soupape ferme l'entrée et ouvre la sortie, **caractérisé en ce qu'**un dispositif de commande d'écoulement (44) est placé entre la sortie et le volume de fluide sous pression relativement faible, le dispositif de commande d'écoulement (44) comportant une partie de réduction qui réduit l'écoulement de fluide à travers le dispositif de commande d'écoulement, l'étendue sur laquelle l'écoulement de fluide est réduit diminuant lorsque la pression de fluide dans la chambre (17) augmente.

2. Ensemble de soupape (10) selon la revendication 1, dans lequel la partie de réduction augmente la surface en coupe transversale disponible pour l'écoulement de fluide à travers le dispositif de commande d'écoulement (44) lorsque la pression de fluide dans la chambre (17) augmente.

3. Ensemble de soupape (10) selon la revendication 1 ou 2, dans lequel l'ensemble de soupape (10) comprend de plus des moyens de commande qui peuvent être actionnés de manière répétée pour déplacer la soupape de commutation (37) entre ses première et seconde configurations afin de maintenir la pression de fluide dans la chambre (17) à une valeur située entre la pression du fluide sous pression relativement élevée et la pression du fluide sous pression relativement faible.

4. Ensemble de soupape selon la revendication 1, 2 ou 3, dans lequel la soupape de commutation (37) comporte un élément de soupape (42) qui est mobile entre une première position dans laquelle l'élément de soupape (42) ferme la sortie et ouvre l'entrée, et une seconde position dans laquelle l'élément de soupape (42) ferme l'entrée et ouvre la sortie.

5. Ensemble de soupape (10) selon l'une quelconque des revendications précédentes, dans lequel le dispositif de commande d'écoulement (44) comprend une ouverture (48) à travers laquelle du fluide provenant de la chambre (17) peut s'écouler, l'ouverture étant partiellement bloquée par une partie de réduction d'écoulement mobile (50), la partie de réduction d'écoulement (50) étant adaptée pour se déplacer en réponse à des forces exercées sur la partie de réduction d'écoulement (50) résultant de la différence de pression entre le fluide situé dans la chambre (17) et le fluide situé dans le volume de fluide sous pression relativement faible.

6. Ensemble de soupape (10) selon la revendication 1, dans lequel la partie de réduction d'écoulement (50) se déplace pour bloquer une proportion plus petite de l'ouverture (48) lorsque la pression de fluide dans la chambre (17) augmente par rapport à la pression de fluide dans le volume de fluide sous pression relativement faible.

7. Ensemble de soupape (10) selon la revendication 5 ou 6, dans lequel la partie de réduction d'écoulement (50) est une formation qui s'étend vers l'intérieur de l'ouverture (48) et qui est faite d'un matériau élastique.

8. Ensemble de soupape (10) selon l'une quelconque des revendications 1 à 4, dans lequel le dispositif de commande d'écoulement (44) comporte une première (54) et une seconde (56) ouvertures à travers lesquelles peut s'écouler du fluide provenant de la chambre, la première ouverture (54) étant munie d'un élément de soupape (60), d'un siège de soupape (58), et de moyens de rappel élastique (62) qui fournissent une force de rappel repoussant l'élément de soupape (60) en contact avec le siège de soupape (58), en bloquant ainsi l'ouverture (54), les moyens de rappel élastique (62) étant agencés de telle sorte que l'élément de soupape (60) puisse être déplacé depuis le siège de soupape (58) à l'encontre de la force de rappel des moyens de rappel élastique (62) lorsque la pression de fluide dans la chambre (17) dépasse d'une quantité prédéterminée la pression de fluide à la sortie.

9. Ensemble de soupape (10) selon la revendication 8, dans lequel l'élément de soupape (60) est une bille.

10. Ensemble de soupape (10) selon l'une quelconque des revendications précédentes, dans lequel l'ensemble de soupape (10) comporte de plus une soupape principale pour commander la pression de fluide dans un volume actif dans trois états de commande, la soupape principale ayant trois orifices pour fluide, un premier orifice (11) appliquant un fluide sous pression relativement élevée à l'entrée de la chambre, l'écoulement de fluide à partir du premier orifice (11) vers un deuxième orifice (12) étant permis dans le premier état de commande, un écoulement de fluide depuis le deuxième orifice (12) vers un troisième orifice (13) étant permis dans le deuxième état de commande, et un écoulement de fluide entre les premier (11), deuxième (12) et troisième (13) orifices étant empêché dans le troisième état de commande.

11. Ensemble de soupape (10) selon la revendication 10, dans lequel le premier état de commande est obtenu lorsque la pression de fluide dans la chambre (17) est plus petite qu'une valeur inférieure prédéterminée, le deuxième état de commande est obtenu lorsque la pression de fluide dans la chambre (17) dépasse une valeur supérieure prédéterminée, et le troisième état de commande est obtenu lorsque la pression de fluide dans la chambre (17) est entre les valeurs supérieure et inférieure prédéterminées.

12. Ensemble de soupape selon la revendication 10 ou 11, dans lequel le deuxième orifice (13) fournit du fluide à des moyens d'actionnement d'un frein de véhicule.

13. Ensemble de soupape selon la revendication 12, dans lequel l'ensemble de soupape est une soupape d'ABS.

14. Ensemble de soupape selon la revendication 12, dans lequel l'ensemble de soupape est une soupape d'EBS.
